# EUROPÄISCHE PATENTANMELDUNG

(11) **EP 1 970 964 A2**
(43) Veröffentlichungstag der Anmeldung: **17.09.2008**
(21) Anmeldenummer: 08004133.8
(22) Anmeldetag: 06.03.2008
(51) Int. Cl.: H01L 31/02, H02J 7/35

(54) **Solarmodul**

(30) Priorität: 13.03.2007 DE 102007012590
(71) Anmelder: Diehl AKO Stiftung & Co. KG, 88239 Wangen im Allgäu (DE)
(72) Erfinder: Schill, Christoph, 88213 Ravensburg (DE)
(74) Vertreter: Diehl Patentabteilung

(57) **Zusammenfassung**

Ein Solarmodul (10) weist einen Solargenerator (12) zum Umwandeln einfallender Strahlung in elektrische Leistung und einen Solarwechselrichter (14) zum Einspeisen der vom Solargenerator (12) erzeugten Leistung in ein Netz (16) oder einen Verbraucher auf. Das Solarmodul (10) weist weiter eine variable Vorlast (18), die dem Solargenerator (12) parallel geschaltet ist, und eine Steuervorrichtung (20), welche die variable Vorlast (18) ansteuert, eine aktuell verfügbare Leistung des Solargenerators (12) sowie einen aktuellen Leerlaufverlust des Solarwechselrichters (14) erfasst, die erfasste Leistung des Solargenerators (12) und den erfassten Leerlaufverlust des Solarwechselrichters (14) vergleicht und ein Einspeisen der Leistung des Solargenerators (10) durch den Solarwechselrichter (14) in das Netz (16) oder den Verbraucher nur dann freischaltet, wenn die erfasste Leistung des Solargenerators (12) den erfassten Leerlaufverlust des Solarwechselrichters (14) übersteigt, auf.

## Beschreibung

Die vorliegende Erfindung betrifft ein Solarmodul nach dem Oberbegriff des Anspruchs 1 sowie ein Verfahren zum Steuern des Betriebs eines Solarmoduls nach dem Oberbegriff des Anspruchs 9.

Ein Solarmodul weist üblicherweise einen Solargenerator mit wenigstens einer Solarzelle zum Umwandeln einfallender Strahlung in elektrische Leistung, wenigstens einen dem Solargenerator parallel geschalteten Speicherkondensator und einen Solarwechselrichter zum Einspeisen der vom Solargenerator erzeugten Leistung in ein Netz oder einen Verbraucher auf. Dabei sollte der Solarwechselrichter mit der Netzeinspeisung mö glichst erst beginnen, wenn die Leistung des Solargenerators groß genug ist, um die Leerlaufverluste des Solarwechselrichters zu kompensieren, da andernfalls die noch fehlende Leistung dem Netz entnommen wird, was unnö tige Verluste verursacht.

Ein bekannter Ansatz zur Lö sung des obigen Problems besteht darin, den Solarwechselrichter nur dann zuzuschalten, wenn die Solargeneratorspannung einen vorgegebenen Schwellenwert überschreitet. Problematisch ist hierbei, dass die Leerlaufspannung des Solargenerators wenig über seine mö gliche Leistung zur Netzeinspeisung aussagt. Es kann daher passieren, dass schon unterhalb des Schwellenwerts eine ausreichende Leistung zur Verfügung steht, die nicht genutzt wird. Es kann andererseits auch der Fall eintreten, dass die Leistung des Solargenerators trotz Überschreiten des Spannungsschwellenwerts zu klein ist (zum Beispiel bei Teilverschattung der Solarzellen). Um in diesem Fall nicht unnö tig Energie aus dem Netz zu ziehen, muss der Solarwechselrichter wieder abgeschaltet werden. Bei ungünstigen Lichtverhältnissen (zum Beispiel Vollmond) kann dies zu einem wiederholten Ein- und Ausschalten des Solarwechselrichters führen, was die Relais verschleißt und Geräusche verursacht.

Es ist ein zweiter Lö sungsansatz bekannt, bei dem der Solargenerator mit einem Widerstand belastet wird. In diesem Fall muss der konstante Wert des Widerstands aber für eine erwünscht gute Funktionsweise auf den vom Kunden jeweils verwendeten Solargenerator und sonstige Randbedingungen (zum Beispiel Netzspannung, Beleuchtungsverhältnisse) abgestimmt werden, was sehr aufwändig ist und die Herstellungskosten deutlich erhö ht.

Der vorliegenden Erfindung liegt daher die Aufgabe zugrunde, ein Solarmodul zu entwickeln, das die oben beim Stand der Technik vorhanden Nachteile vermeidet und insbesondere eine Netzeinspeisung durch den Solarwechselrichter nur bei ausreichender Leistung des Solargenerators erlaubt.

Diese Aufgabe wird durch ein Solarmodul mit den Merkmalen des Anspruchs 1 sowie durch ein Verfahren zum Steuern des Betriebs eines Solarmoduls mit den Merkmalen des Anspruchs 9 gelö st. Vorteilhafte Ausgestaltungen und Weiterbildungen der Erfindung sind Gegenstand der jeweiligen abhängigen Ansprüche.

Das Solarmodul weist einen Solargenerator zum Umwandeln einfallender Strahlung in elektrische Leistung und einen Solarwechselrichter zum Einspeisen der vom Solargenerator erzeugten Leistung in ein Netz oder einen Verbraucher auf. Erfindungsgemäß ist das Solarmodul weiter mit einer variablen Vorlast, die dem Solargenerator parallel geschaltet ist, und einer Steuervorrichtung versehen. Diese Steuervorrichtung ist ausgebildet, um die variable Vorlast anzusteuern, eine aktuell verfügbare Leistung des Solargenerators sowie einen aktuellen Leerlaufverlust des Solarwechselrichters zu erfassen, die erfasste Leistung des Solargenerators und den erfassten Leerlaufverlust des Solarwechselrichters zu vergleichen, und ein Einspeisen der Leistung des Solargenerators durch den Solarwechselrichter in das Netz oder den Verbraucher nur dann freizuschalten, wenn die erfasste Leistung des Solargenerators den erfassten Leerlaufverlust des Solarwechselrichters übersteigt.

Das entsprechende Verfahren zum Steuern des Betriebs eines Solarmoduls mit einem Solargenerator zum Umwandeln einfallender Strahlung in elektrische Leistung und einem Solarwechselrichter zum Einspeisen der vom Solargenerator erzeugten Leistung in ein Netz oder einen Verbraucher weist die Schritte auf: Erfassen einer aktuell verfügbaren Leistung des Solargenerators; Erfassen eines aktuellen Leerlaufverlusts des Solarwechselrichters; Vergleichen der erfassten Leistung des Solargenerators und des erfassten Leerlaufverlusts des Solarwechselrichters; und Einspeisen der Leistung des Solargenerators durch den Solarwechselrichter in das Netz oder den Verbraucher nur dann, wenn die erfasste Leistung des Solargenerators den erfassten Leerlaufverlust des Solarwechselrichters übersteigt.

Der Solargenerator wird mittels der variablen Vorlast belastet, wobei durch eine geeignete Ansteuerung der Vorlast die verfügbare Leistung des Solargenerators exakt ermittelt werden kann. Dies ermö glicht die Netzeinspeisung durch den Solarwechselrichter genau dann, wenn die Generatorleistung die Leerlaufverluste des Solarwechselrichters kompensiert. Ein unnö tiges Relaisschalten wird verhindert, und ein nahtloser Übergang in den Einspeisebetrieb ohne Energieverluste ist mö glich.

In einer Ausgestaltung der Erfindung schaltet die Steuervorrichtung das Einspeisen der Leistung des Solargenerators durch den Solarwechselrichter in das Netz oder den Verbraucher nur dann frei, wenn die erfasste Leistung des Solargenerators den erfassten Leerlaufverlust des Solarwechselrichters für eine vorbestimmte Mindestzeitdauer übersteigt. Dies ermö glicht zum Beispiel bei schwankender Generatorleistung eine stabilere Funktion des Solarmoduls.

In einer weiteren Ausgestaltung der Erfindung erfasst die Steuervorrichtung die Leistung des Solargenerators an einem optimalen Arbeitspunkt des Solargenerators oder des gesamten Solarmoduls.

Die Steuervorrichtung kann beispielsweise ein in den Solarwechselrichter integrierter Mikrocontroller sein.

Die variable Vorlast kann wahlweise linear (Belastung analog einstellbar) oder getaktet (Belastung über Ein/Aus-Verhältnis einstellbar) ausgeführt sein.

In einer weiteren Ausgestaltung der Erfindung ist dem Solargenerator wenigstens ein Speicherkondensator parallel geschaltet, und die Steuervorrichtung entlädt diesen wenigstens einen Speicherkondensator bei Bedarf (zum Beispiel Ö ffnen des Gehäuses zu Servicezwecken oder für Produktionstests) über die Vorlast. In diesem Fall kann der Vorlast zusätzlich eine Anzeigevorrichtung zum Anzeigen eines Entladestroms durch die Vorlast zugeordnet sein, um auf diese Weise einen Ladungszustand der Speicherkondensatoren anzuzeigen.

In einer noch weiteren Ausgestaltung der Erfindung sind dem Solargenerator mehrere in Reihe geschaltete Speicherkondensatoren parallel geschaltet, und jedem der mehreren Speicherkondensatoren ist eine variable Vorlast zugeordnet. Die variablen Vorlasten kö nnen bei symmetrischer Ausführung hier gleichzeitig der Symmetrierung der Speicherkondensatoren dienen.

Gemäß einem weiteren Aspekt der vorliegenden Erfindung wird ein Solarmodul vorgeschlagen, mit einem Solargenerator zum Umwandeln einfallender Strahlung in elektrische Leistung; wenigstens einem Speicherkondensator, der dem Solargenerator parallel geschaltet ist; und einem Solarwechselrichter zum Einspeisen der vom Solargenerator erzeugten Leistung in ein Netz oder einen Verbraucher, wobei das Solarmodul weiter eine variable Vorlast, die dem Solargenerator parallel geschaltet ist; und eine Steuervorrichtung, welche den wenigstens einen Speicherkondensator bei Bedarf über die Vorlast entlädt aufweist.

Gemäß einem weiteren Aspekt der vorliegenden Erfindung wird ein Solarmodul vorgeschlagen, mit einem Solargenerator zum Umwandeln einfallender Strahlung in elektrische Leistung; mehreren in Reihe geschalteten Speicherkondensatoren, die dem Solargenerator parallel geschaltet ist; und einem Solarwechselrichter zum Einspeisen der vom Solargenerator erzeugten Leistung in ein Netz oder einen Verbraucher, wobei jedem der mehreren Speicherkondensatoren eine variable Vorlast zugeordnet ist, über welche eine Symmetrierung der Speicherkondensatoren erreicht werden kann.

Obige sowie weitere Merkmale und Vorteile der Erfindung werden aus der nachfolgenden Beschreibung bevorzugter, nicht-einschränkender Ausführungsbeispiele unter Bezug auf die beiliegenden Zeichnungen besser verständlich. Darin zeigen:
- Fig. 1: ein stark vereinfachtes Blockschaltbild eines Solarmoduls gemäß einem ersten Ausführungsbeispiel der vorliegenden Erfindung;
- Fig. 2: ein stark vereinfachtes Blockschaltbild eines Solarmoduls gemäß einem zweiten Ausführungsbeispiel der vorliegenden Erfindung; und
- Fig. 3: ein detaillierteres Blockschaltbild des Solarmoduls von Fig. 1.

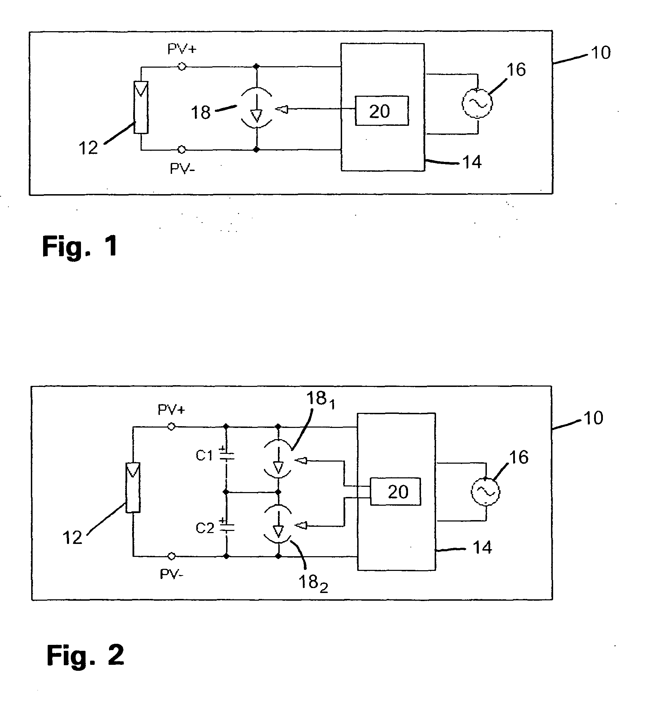

Bezug nehmend auf Fig. 1 werden nun der Aufbau und die Funktionsweise eines Solarmoduls gemäß einem ersten Ausführungsbeispiel näher erläutert.

Das Solarmodul 10 enthält in wohlbekannter Weise einen Solargenerator 12 mit wenigstens einer Solarzelle zum Umwandeln einfallenden Lichts in elektrische Leistung und einen Solarwechselrichter 14 zum Einspeisen der vom Solargenerator 12 erzeugten Leistung in ein Netz 16 oder einen Verbraucher. Wie in Fig. 1 dargestellt, ist das Solarmodul 10 zusätzlich mit einer variablen Vorlast 18 versehen, die dem Solargenerator 12 (und einem gegebenenfalls ebenfalls vorhandenen Speicherkondensator) parallel geschaltet ist. Diese variable Vorlast 18 wird durch einen im Solarwechselrichter 14 integrierten Mikrocontroller 20 angesteuert.

Die Funktionsweise dieses Solarmoduls 10 ist wie folgt.

Vor der Zuschaltung des Solarwechselrichters 14 auf das Netz 16 wird der Solargenerator 12 mit Hilfe der variablen Vorlast 18 belastet. Die Belastung wird dabei durch den Mikrocontroller 20 so eingestellt, dass die momentan verfügbare Leistung des Solargenerators 12 in einem optimalen Arbeitspunkt gemessen werden kann. Gleichzeitig berechnet der Mikrocontroller 20 die Leerlaufverluste des Solarwechselrichters 14, die sich momentan bei Netzaufschaltung 16 ergeben würden. Diese Leerlaufverluste sind hauptsächlich von der Netzspannung und der Solargeneratorspannung abhängig, und ihr Verlauf hängt stark von der Topologie des Solarwechselrichters 14 ab.

Überschreitet die gemessene Leistung des Solargenerators 12 die berechneten Leerlaufverluste des Solarwechselrichters 14, so schaltet der Mikrocontroller 20 den Solarwechselrichter 14 auf das Netz 16 oder den Verbraucher. Da sich der Solargenerator 12 bereits im optimalen Arbeitspunkt befindet, ist ein nahtloser Übergang in den Einspeisebetrieb ohne Energieverluste mö glich.

Um auch bei schwankender Generatorleistung eine stabile Funktion des Solarmoduls 10 zu erreichen, kö nnen weitere Zuschaltbedingungen für den Solarwechselrichter 14 eingesetzt werden. Zum Beispiel muss die ausreichende Generatorleistung für eine vorgegebene Mindestzeitdauer zur Verfügung stehen.

Der Arbeitspunkt, in dem die Leistung des Solargenerators 12 gemessen wird, kann der MPP (maximum power point) des Solargenerators 12 sein. Bevorzugter wird jedoch in einem Arbeitspunkt gemessen, der für das gesamte Solarmodul 10 den MPP darstellt. Dies ist ohne Betrieb des Solarwechselrichters 14 mö glich, da dessen Verluste und ihre Abhängigkeit von Netzspannung und Generatorspannung bekannt sind.

Der Arbeitspunkt kann wahlweise fest oder in Abhängigkeit von verschiedenen Parametern (z.B. Netzspannung) gewählt werden. Er kann außerdem über Tracking- und Selbstlernfunktionen optimiert werden.

Die variable Vorlast 18 des Solargenerators 12 kann wahlweise linear, d.h. mit analog einstellbarer Belastung, oder getaktet, d.h. mit über das Ein/Aus-Verhältnis einstellbarer Belastung, ausgeführt werden.

Für den Betrieb der obigen Vorlast 18 sind keine zusätzlichen Messeinrichtungen im Solarmodul 10 notwendig, da die Spannungen auf der Generatorseite 12 und der Netzseite 16 ohnehin gemessen werden müssen. Wenn die U/I-Kennlinie der Vorlast 18 bekannt ist, kann außerdem auf die Messung des Solargeneratorstroms verzichtet werden.

Unter Bezug auf Fig. 2 wird nun ein zweites Ausführungsbeispiel eines Solarmoduls näher erläutert. Dabei sind gleiche bzw. analoge Komponenten mit den gleichen Bezugsziffern gekennzeichnet, und nachfolgend werden nur die Unterschiede zum ersten Ausführungsbeispiel von Fig. 1 beschrieben.

Dem Solargenerator 12 ist in bekannter Weise eine Reihenschaltung aus mehreren (hier zwei) Speicherkondensatoren C1, C2 parallel geschaltet. Jedem dieser Speicherkondensatoren C1, C2 ist eine variable Vorlast 18₁, 18₂ in der Art einer Brückenschaltung zugeordnet, wie in Fig. 2 dargestellt. Alle Vorlasten 18₁, 18₂ werden über den Mikrocontroller 20 des Solarwechselrichters 14 angesteuert.

Die Speicherkondensatoren C1, C2 sind üblicherweise sehr groß dimensioniert und kö nnen zum Beispiel auf über 800 V geladen werden. Die Vorlasten 18₁, 18₂ kö nnen genutzt werden, um diese Ladungen der Speicherkondensatoren C 1, C2 in kurzer Zeit zu beseitigen, was beispielsweise während der Fertigung und im Service von Vorteil ist. Die Speicherkondensatoren C1, C2 werden hierzu über die Vorlasten 18₁, 18₂ durch eine entsprechende Ansteuerung durch den Mikrocontroller 20 entladen.

Diese Entladungsfunktion der Vorlasten ist natürlich in analoger Weise auch bei nur einem Speicherkondensator oder bei mehr als zwei Speicherkondensatoren mit einer entsprechenden Anzahl von Vorlasten nutzbar.

Aufgrund der hohen Spannungen wird der Speicherkondensator häufig als Reihenschaltung von mehreren Elektrolytkondensatoren C1, C2 ausgeführt, wie in Fig. 2 dargestellt. Die variablen Vorlasten 18₁, 18₂ kö nnen in diesem Fall bei symmetrischer Ausführung gleichzeitig zur Symmetrierung der Speicherkondensatoren C1, C2 dienen.

Neben den hier beschriebenen Funktionen der Entladung und Symmetrierung der Speicherkondensatoren C1, C2 dienen die Vorlasten 18₁, 18₂ natürlich auch in diesem zweiten Ausführungsbeispiel dazu, analog dem oben beschriebenen ersten Ausführungsbeispiel von Fig. 1 den Solarwechselrichter 14 erst bei einer ausreichenden Leistung des Solargenerators 12 zur Netzeinspeisung 16 freizuschalten, ohne dass dies hier nochmals im Detail beschrieben wird.

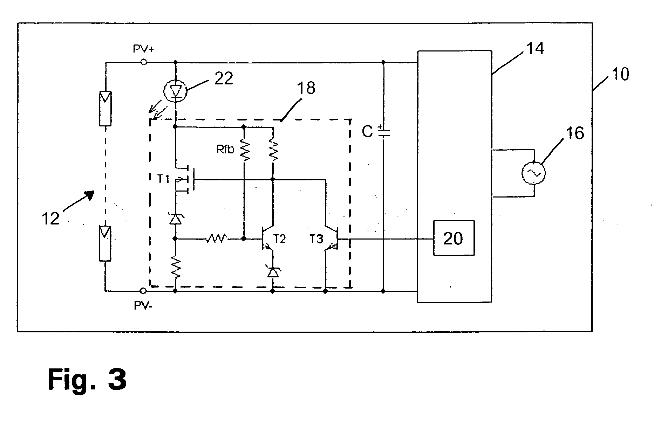

Es wird nun unter Bezug auf Fig. 3 eine mö gliche Realisierung einer Vorlast näher erläutert, wie sie in den Solarmodulen von Fig. 1 und 2 einsetzbar ist.

Der Aufbau des Solarmoduls 10 entspricht im Wesentlichen dem von Fig. 1, außer dass zusätzlich ein Speicherkondensator C vorgesehen ist, der dem Solargenerator 12 bzw. dem Solarwechselrichter 14 parallel geschaltet ist.

In der variablen Vorlast 18, die von dem im Solarwechselrichter 14 integrierten Mikrocontroller 20 angesteuert wird, bilden die beiden Transistoren T1 und T2 eine Stromsenke, die über den Rückkopplungswiderstand Rfb so beeinflusst wird, dass die absorbierte Leistung in einem weiten Bereich näherungsweise konstant ist. Im Gegensatz zu einem Entladewiderstand, der bei kleiner werdender Kondensatorspannung immer weniger Strom abführt, steigt hier der Strom immer mehr an, wodurch die Entladezeit des Speicherkondensators C sehr viel kürzer ist. Durch die limitierte Leistung ist die Schaltung unabhängig von der Solargeneratorspannung dauerlastfest.

Über den Transistor T3 kann der Mikrocontroller 20 die Vorlast 18 ein- und ausschalten. Über das Ein/Aus-Verhältnis wird die Belastung des Solargenerators 12 durch die Vorlast 18 gesteuert.

Zur Ermittlung der verfügbaren Solargeneratorleistung wird die Solargeneratorspannung nach Art eines Zweipunktreglers geregelt, indem die Vorlast 18 ein- und ausgeschaltet wird. Die Spannung am Arbeitspunkt wird in Abhängigkeit von der Netzspannung gewählt. Mit Hilfe des sich bei der Regelung ergebenden Tastverhältnisses, der gemessenen Solargeneratorspannung und der bekannten U/I-Kennlinie der Vorlast 18 berechnet der Mikrocontroller 20 die momentan verfügbare Leistung des Solargenerators 12, um sie mit den Leerlaufverlusten des Solarwechselrichters 14 zu vergleichen.

Bei der Entladefunktion wird die Vorlast 18 automatisch aktiviert, sobald der Solarwechselrichter 14 vom Netz 16 getrennt oder ein gefährlicher Zustand (z.B. geö ffnetes Gehäuse, Fehlfunktion im Gerät) erkannt wird. Die als LED ausgeführte Anzeigevorrichtung 22 im Entladezweig leuchtet aufgrund des Entladestroms, solange der Speicherkondensator C noch nicht ganz entladen ist.

Der in Fig. 3 dargestellte Aufbau der Vorlast 18 kann selbstverständlich in analoger Weise auch auf ein Solarmodul 10 des zweiten Ausführungsbeispiels mit zwei oder mehr Speicherkondensatoren C1, C2 übertragen werden.

## Patentansprüche

1. Solarmodul (10), mit
einem Solargenerator (12) zum Umwandeln einfallender Strahlung in elektrische Leistung; und
einem Solarwechselrichter (14) zum Einspeisen der vom Solargenerator (12) erzeugten Leistung in ein Netz (16) oder einen Verbraucher,
**dadurch gekennzeichnet,**
**dass** das Solarmodul (10) weiter aufweist:
eine variable Vorlast (18), die dem Solargenerator (12) parallel geschaltet ist; und
eine Steuervorrichtung (20), welche die variable Vorlast (18) ansteuert, eine aktuell verfügbare Leistung des Solargenerators (12) sowie einen aktuellen Leerlaufverlust des Solarwechselrichters (14) erfasst, die erfasste Leistung des Solargenerators (12) und den erfassten Leerlaufverlust des Solarwechselrichters (14) vergleicht und ein Einspeisen der Leistung des Solargenerators (10) durch den Solarwechselrichter (14) in das Netz (16) oder den Verbraucher nur dann freischaltet, wenn die erfasste Leistung des Solargenerators (12) den erfassten Leerlaufverlust des Solarwechselrichters (14) übersteigt.

2. Solarmodul nach Anspruch 1,
**dadurch gekennzeichnet,**
**dass** die Steuervorrichtung (20) das Einspeisen der Leistung des Solargenerators (10) durch den Solarwechselrichter (14) in das Netz (16) oder den Verbraucher nur dann freischaltet, wenn die erfasste Leistung des Solargenerators (12) den erfassten Leerlaufverlust des Solarwechselrichters (14) für eine vorbestimmte Mindestzeitdauer übersteigt.

3. Solarmodul nach Anspruch 1 oder 2,
**dadurch gekennzeichnet,**
**dass** die Steuervorrichtung (20) die Leistung des Solargenerators (12) an einem optimalen Arbeitspunkt des Solargenerators (12) oder des gesamten Solarmoduls (10) erfasst.

4. Solarmodul nach einem der Ansprüche 1 bis 3,
**dadurch gekennzeichnet,**
**dass** die Steuervorrichtung (20) ein in den Solarwechselrichter (14) integrierter Mikrocontroller ist.

5. Solarmodul nach einem der Ansprüche 1 bis 4,
**dadurch gekennzeichnet,**
**dass** die variable Vorlast (18) linear oder getaktet ausgeführt ist.

6. Solarmodul nach einem der Ansprüche 1 bis 5,
**dadurch gekennzeichnet,**
**dass** dem Solargenerator (12) wenigstens ein Speicherkondensator (C, C1, C2) parallel geschaltet ist; und
**dass** die Steuervorrichtung (20) den wenigstens einen Speicherkondensator (C, C1, C2) bei Bedarf über die Vorlast (18) entlädt.

7. Solarmodul nach Anspruch 6,
**dadurch gekennzeichnet,**
**dass** der Vorlast (18) eine Anzeigevorrichtung (22) zum Anzeigen eines Entladestroms durch die Vorlast (18) zugeordnet ist.

8. Solarmodul nach einem der Ansprüche 1 bis 7,
**dadurch gekennzeichnet,**
**dass** dem Solargenerator (12) mehrere in Reihe geschaltete Speicherkondensatoren (C1, C2) parallel geschaltet sind; und
**dass** jedem der mehreren Speicherkondensatoren (C1, C2) eine variable Vorlast (18₁, 18₂) zugeordnet ist.

9. Verfahren zum Steuern des Betriebs eines Solarmoduls (10) mit einem Solargenerator (12) zum Umwandeln einfallender Strahlung in elektrische Leistung und einem Solarwechselrichter (14) zum Einspeisen der vom Solargenerator (12) erzeugten Leistung in ein Netz (16) oder einen Verbraucher,
**dadurch gekennzeichnet,**
**dass** das Verfahren die Schritte aufweist:
Erfassen einer aktuell verfügbaren Leistung des Solargenerators (12);
Erfassen eines aktuellen Leerlaufverlusts des Solarwechselrichters (14); Vergleichen der erfassten Leistung des Solargenerators (12) und des erfassten Leerlaufverlusts des Solarwechselrichters (14); und
Einspeisen der Leistung des Solargenerators (10) durch den Solarwechselrichter (14) in das Netz (16) oder den Verbraucher nur dann, wenn die erfasste Leistung des Solargenerators (12) den erfassten Leerlaufverlust des Solarwechselrichters (14) übersteigt.

10. Verfahren nach Anspruch 9,
**dadurch gekennzeichnet,**
**dass** die Leistung des Solargenerators (10) durch den Solarwechselrichter (14) in das Netz (16) oder den Verbraucher nur dann eingespeist wird, wenn die erfasste Leistung des Solargenerators (12) den erfassten Leerlaufverlust des Solarwechselrichters (14) für eine vorbestimmte Mindestzeitdauer übersteigt.

11. Verfahren nach Anspruch 9 oder 10,
**dadurch gekennzeichnet,**
**dass** die Leistung des Solargenerators (12) an einem optimalen Arbeitspunkt des Solargenerators (12) oder des gesamten Solarmoduls (10) erfasst wird.

12. Verfahren nach einem der Ansprüche 9 bis 11,
**dadurch gekennzeichnet,**
**dass** dem Solargenerator (12) wenigstens ein Speicherkondensator (C, C1, C2) parallel geschaltet ist; und
**dass** das Verfahren bei Bedarf weiter den Schritt des Entladens des wenigstens einen Speicherkondensators (C, C1, C2) über eine dem Solargenerator (12) parallel geschaltete Vorlast (18) aufweist.

13. Verfahren nach Anspruch 12,
**dadurch gekennzeichnet,**
**dass** das Verfahren ferner den Schritt des Anzeigens eines Entladestroms durch die Vorlast (18) aufweist.

14. Solarmodul (10), mit
einem Solargenerator (12) zum Umwandeln einfallender Strahlung in elektrische Leistung;
wenigstens einem Speicherkondensator (C, C1, C2), der dem Solargenerator (12) parallel geschaltet ist; und
einem Solarwechselrichter (14) zum Einspeisen der vom Solargenerator (12) erzeugten Leistung in ein Netz (16) oder einen Verbraucher,
**dadurch gekennzeichnet,**
**dass** das Solarmodul (10) weiter aufweist:
eine variable Vorlast (18), die dem Solargenerator (12) parallel geschaltet ist; und
eine Steuervorrichtung (20), welche den wenigstens einen Speicherkondensator (C, C1, C2) bei Bedarf über die Vorlast (18) entlädt.

15. Verfahren zum Steuern des Betriebs eines Solarmoduls (10) mit einem Solargenerator (12) zum Umwandeln einfallender Strahlung in elektrische Leistung, wenigstens einem Speicherkondensator (C, C1, C2), der dem Solargenerator (12) parallel geschaltet ist, und einem Solarwechselrichter (14) zum Einspeisen der vom Solargenerator (12) erzeugten Leistung in ein Netz (16) oder einen Verbraucher,
**dadurch gekennzeichnet,**
**dass** der wenigstens eine Speicherkondensator (C, C1, C2) bei Bedarf über eine dem Solargenerator (12) parallel geschaltete Vorlast (18) entladen wird.

16. Solarmodul (10), mit
einem Solargenerator (12) zum Umwandeln einfallender Strahlung in elektrische Leistung;
mehreren in Reihe geschalteten Speicherkondensatoren (C1, C2), die dem Solargenerator (12) parallel geschaltet ist; und
einem Solarvvechselrichter (14) zum Einspeisen der vom Solargenerator (12) erzeugten Leistung in ein Netz (16) oder einen Verbraucher,
**dadurch gekennzeichnet,**
**dass** jedem der mehreren Speicherkondensatoren (C1, C2) eine variable Vorlast (18₁, 18₂) zugeordnet ist.
